# EUROPEAN PATENT APPLICATION

(11) **EP 1 679 544 A1**
(43) Date of publication of application: **12.07.2006**
(21) Application number: 05113094.6
(22) Date of filing: 30.12.2005
(51) Int. Cl.: G02F 1/13, G02F 1/13357

(54) **Liquid crystal display apparatus**

(30) Priority: 05.01.2005 KR 2005000773
(71) Applicant: SAMSUNG ELECTRONICS CO., LTD., Suwon-City, Kyungki-do (KR)
(72) Inventor: Park, Cheol-jin Woncheon Seongil Apt. 203-910, Suwon-si Gyeonggi-do (KR)
(74) Representative: Walaski, Jan Filip

(57) **Abstract**

The present invention relates to a liquid crystal display (LCD) apparatus, comprising a top chassis (20); a display panel (30) provided in rear of the top chassis; a lamp (40) provided in rear of the top chassis driven by parallel electrode (42) power; and a bottom chassis (50) provided in rear of the lamp formed with leakage current preventing holes (54) to reduce the leakage current from the lamp as much as possible. Thus, the present invention provides a liquid crystal display apparatus capable of reducing leakage current generated between a lamp and a bottom chassis as much as possible.

## Description

The invention relates to liquid crystal display apparatus.

Recently, application of liquid crystal displays (LCD), which are a kind of flat panel display, have gradually been extended to monitors, TV sets and the like, and demands thereon has been increased accordingly.

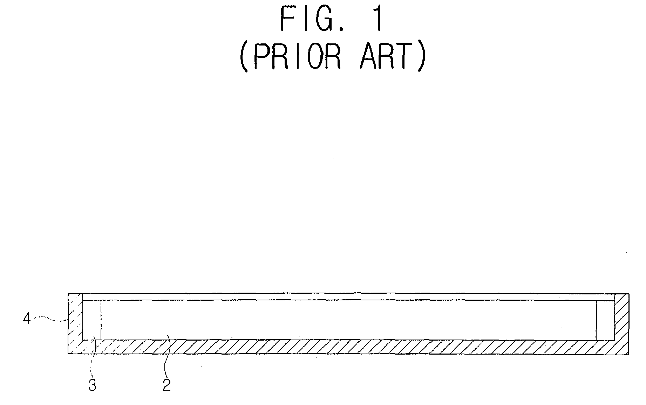

Referring to Figure 1, a conventional liquid crystal display apparatus comprises a top chassis, a display panel provided behind the top chassis, a lamp 2 provided in the rear of the display panel, and a bottom chassis 4 provided behind the lamp coupled with the top chassis. As illustrated in Figure 1, the lamp 2 is supported within the bottom chassis 4.

However, the liquid crystal display apparatus with the above-described construction causes leakage current generated between the lamp 2 and the bottom chassis 4, when external power is supplied through an electrode part 3 of the lamp 2. The current leakage is particularly heavy around the electrode part 3 of the lamp 2. Because of the current leakage, when power is supplied after the lamp 2 has been left at low temperature, at least one partial dark area is generated. Fluctuations in consumption power also can be significant.

In addition, this may result in widening current deviations between the left and the right sides of the lamp 2 and also increasing the temperature of the backlight unit.

An aim of the invention is to provide a liquid crystal display apparatus capable of reducing leakage current generated between a lamp and a bottom chassis.

The invention provides a liquid crystal display (LCD) apparatus, comprising a top chassis; a display panel provided in rear of the top chassis; a lamp provided behind the top chassis, which is driven by parallel electrode power; and a bottom chassis provided behind the lamp, which is formed with current leakage preventing holes to reduce the leakage current from the lamp.

Embodiments of the invention will now be described by way of example only with reference to the accompanying drawings, in which:
Figure 1 is a cross-sectional view illustrating a coupling structure of a lamp and a bottom chassis of a conventional liquid crystal display apparatus;
Figure 2 is an exploded perspective view of a liquid crystal display apparatus according to the present invention;
Figure 3 is a rear view of the Figure 2 liquid crystal display apparatus; and
Figure 4 is a cross-sectional view illustrating a coupling structure of a lamp and a bottom chassis of the Figure 2 liquid crystal display apparatus.

Throughout the drawings, like reference numerals refer to like parts, components and structures.

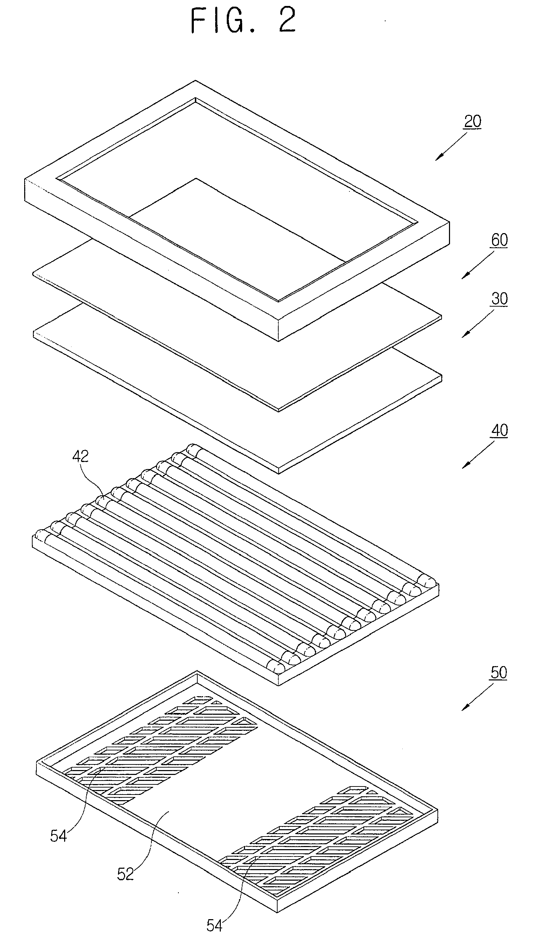

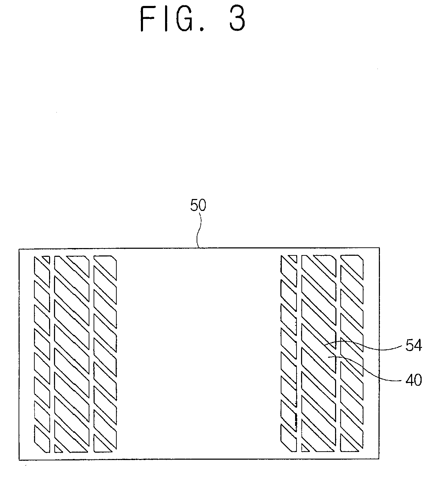

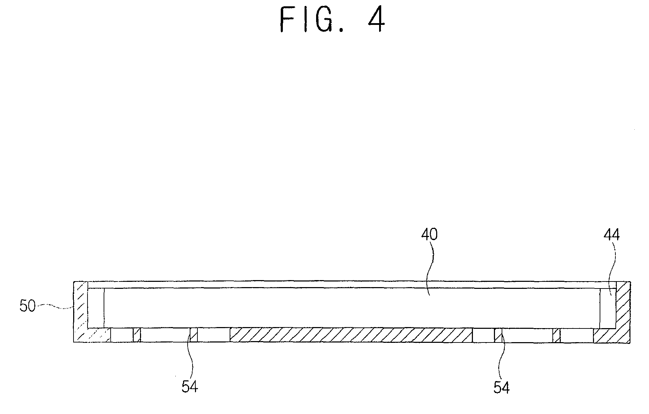

As illustrated in Figures 2 through 4, a liquid crystal display apparatus comprises a top chassis 20, a display panel 30 provided behind the top chassis 20, a lamp 40 provided behind of the display panel 30, and a bottom chassis 50 provided behind the lamp 40. The lamp 40 is driven by parallel electrode power. The bottom chassis 50 is coupled with the top chassis 20

The top chassis 20 has a frame structure having a rectangular aperture in its centre, and surrounding areas of the top chassis 20 bend at right angles, thereby forming lateral walls.

The display panel 30 supplies voltage signals to a liquid crystal provided between a pair of substrates, and changes molecular alignments, to thereby affect lights supplied from the lamp 40, and as a result, a picture is formed on the display panel 30.

The lamp 40 employs a flat fluorescent lamp (FFL), a single fluorescent lamp shaped with a flat plate. On opposite ends of the lamp 40, the lamp comprises electrode parts 42 so that an electric field can be applied to the lamps. The lamp 40 may employ external electrode fluorescent lamps (EEFL).

Considering functionality and economical efficiency, the lamp 40 is preferably driven in parallel by using only one inverter.

The bottom chassis 50 has a lamp receiving part 52 for receiving the lamp 40 therein, and the lamp receiving part 52 of the bottom chassis 50 is formed with a plurality of current leakage preventing holes 54 so as to reduce the leakage current from the lamp 40.

The current leakage preventing holes may be positioned in any of many possible manners. However, positioning of the holes on both sides of the bottom chassis is preferred, corresponding to both sides of electrode parts 42 of the lamp 40.

Shapes and sizes of the current leakage preventing holes 54 may be appropriately adjusted to the extent that the leakage current can be minimised.

An optical sheet 60 is provided to make brightness uniform by increasing an efficiency of collecting lights supplied from the lamp 40 and incident upon the display panel 30. The optical sheet 60 generally comprises a diffusion sheet (not shown) for diffusing light supplied from the lamp 40 to make it relatively uniform, and a prism sheet (not shown) for transforming a travelling passage of the lights diffused by the diffusion sheet at a predetermined angle. The optical sheet 60 may be located between the lamp 40 and the display panel 30, or it may be located on the opposite side of the display panel 30 to the lamp 40.

Hereinafter, a method of minimising the leakage current by preparing the current leakage preventing holes 54 will be described as below.

Generally, if a high voltage is supplied to the lamp 40 in a state that the bottom chassis 50 is connected to the ground, air between the bottom chassis 50 and the lamp 40 act as an insulator, thereby forming a condenser. Here, the bottom chassis 50 and the lamp 40 act as electrodes. As the results, the current leaks due to an electric capacity C of the condenser, and thus a lighting efficiency of the lamp 40 is decreased.

Whereas, according to the principle of the current leakage prevention of the present invention, the electric capacity C of the condenser decreases by preparing the current leakage preventing holes 54 on the both lateral sides of the bottom chassis 50. And thus, the leakage current minimises dues to decreasing the electric capacity C.

Generally, if the condenser having the electric capacity C receives a voltage V, an electric charge Q=CV is accumulated therein. Here, the electric capacitance C is in proportion to size of the electrodes, and is in inverse proportion to distance between the electrodes.

Specifically, on the basis of the above general principle, the bottom chassis 50 comprises the current leakage preventing holes 54, thereby reducing the size of the electrodes and the electric capacitance C decreases. As a result, the leakage current is reduced as the amount of the decreased electric capacitance.

The liquid crystal display apparatus according to the present invention is designed to minimise the leakage current generated between a lamp and a bottom chassis by changing a structure of the bottom chassis. Accordingly, the other structures can be identical to those of conventional liquid crystal display apparatuses, and thus, detailed description thereof will be omitted.

As described above, the leakage current generated between a lamp and a bottom chassis may be minimised, thereby enhancing efficiency of the lamp.

While the invention have been shown and described with reference to an embodiment thereof, it will be appreciated by those skilled in the art that changes in form and details may be made therein without departing from the scope of the invention, which is defined by the appended claims.

## Claims

1. A liquid crystal display apparatus comprising chassis parts containing a liquid crystal display panel and a lamp, wherein a chassis part in proximity to the lamp comprises holes for reducing leakage current from the lamp.

2. The apparatus of claim 1, wherein the current leakage preventing holes are formed at sides of the second chassis part which corresponding to electrodes of the lamp.

3. The apparatus of claim 2, wherein the electrodes are located at opposite ends of the lamp.

4. The apparatus of any preceding claim, wherein the lamp is a flat fluorescent lamp.

5. The apparatus of any preceding claim, wherein the lamp is an external electrode fluorescent lamp.
